# EUROPÄISCHE PATENTSCHRIFT

(11) **EP 2 289 660 B1**
(45) Veröffentlichungstag und Bekanntmachung des Hinweises auf die Patenterteilung: **18.03.2015**
(21) Anmeldenummer: 10008939.0
(22) Anmeldetag: 27.08.2010
(51) Int. Cl.: B23K 26/08, B23K 26/36, B23K 26/38, B23K 26/40, A61K 9/70, B31D 1/02

(54) **Vorrichtung und Verfahren zum Schneiden von TDS- und ODF-Materialen mit zwei Paaren von Vorschubrollen**
Device and process of cutting TDS and ODF materials with two pairs of advancing rolls
Dispositif et procédé de découpe pour des matériels TDS ou ODF avec deux paires de rouleaux d'entraînement

(30) Priorität: 27.08.2009 DE 102009038770; 27.08.2009 DE 102009038753
(43) Veröffentlichungstag der Anmeldung: 02.03.2011
(73) Patentinhaber: Vektor Pharma TF GmbH, 88524 Uttenweiler (DE)
(72) Erfinder: Weber, Roland, 88447 Birkenhard (DE)
(74) Vertreter: Otten, Herbert

(56) Entgegenhaltungen:
- DE-A1- 19 961 361
- DE-A1-102004 059 766
- US-A- 5 902 433
- US-A1- 2003 000 639
- US-A1- 2008 263 841

## Beschreibung

Die Erfindung betrifft eine Vorrichtung zum Schneiden von wirkstoffbeladenen flächenmäßige Substraten gemäß dem Oberbegriff des Anspruchs 1 (siehe, z.B., DE 199 61 361 A1), sowie ein Verfahren zur Herstellung wirkstoffbeladener flächenmäßige Substrate gemäß dem Oberbegriff des Anspruchs 8 (siehe, z.B., US 2003/0000639 A1).

Wirkstoffbeladene flächenmäßige Substrate finden in der Pharmazie eine Vielzahl von relevanten Anwendungen. Zum einen sind die Wirkstoffpflaster, bei welchen ein wirkstoffbeladener Abschnitt auf einem Träger angeordnet wird, und zum Zwecke der Versiegelung und/oder der Verpackung oftmals noch mit einer Deckschicht überzogen ist, zu erwähnen. Diese Wirkstoffpflaster, auch Transdermale Systeme (TDS) genannt müssen im Rahmen ihrer Herstellung lageweise und/oder vollständig zugeschnitten werden, um zum fertigen Produkt zu gelangen. Auch Systeme ohne Trägerschicht, bei welchen sich teile des wirkstoffbeladenen flächenmäßigen Substrats herauslösen lassen, und beispielsweise als Lutschplättchen durch den Mund aufgenommen werden sind zum Anderen ein vergleichbarer Anwendungsfall.

In der Pharmaindustrie werde Trans-Dermalen-Systemen, kurz TDS, das sind Verbunde von mehreren Schichten unterschiedlicher Folien, die mit Klebern wie Acrylaten zu diesen Systemen geformt wurden, oder oral auflösbare Filme einzelner wirkstoffbeladener Schichten, kurz ODF (oral dissolvable film), durch Stanzen oder Pressen zugeschnitten. Diese Stanzen, die meist in Form eines Walzwerks die Folien durchschneiden, werden mit hohem Druck gegeneinander gepresst und zerteilen so die zu bearbeitenden Foliensysteme. Eine weitere Anwendung um TDS zu bearbeiten ist das Zerteilen mit zwei gegenläufigen Schneiden wie dies bei einer Schere oder einem Papiermesser der Fall ist.

Diese Verfahren sind in ihrer Anwendung sehr eingeschränkt, da filigrane Konturen nicht oder nur mit einem sehr hohen finanziellen Aufwand hergestellt werden können. Die großen mechanischen Schnittkräfte die beim Schneiden von TDS wirken, verursachen einen hohen Verschleiß am Stanzwerkzeug. Bei mehrlagigen TDS ist ein Durchtrennen von Teilschichten der Systeme nur bedingt möglich.

Aus dem Stand der Technik, insbesondere aus der WO 97/11841 sind Vorrichtungen sowie Verfahren zum Schneiden flächenartiger Substrate bekannt. Derartige Vorrichtungen nutzen üblicherweise in einem Schneidbereich Vakuum-Ansaugvorrichtungen, um das flächenmäßige Substrat in einer Ebene zu positionieren, damit in der betreffenden Position präzise zugeschnitten werden kann. Derartige Vorrichtungen bzw. Verfahren bedingen jedoch, dass eine Vakuum-Haltevorrichtung vorgesehen ist, welche zusätzlichen gerätetechnischen Aufwand und damit zusätzliche Kosten verursacht. Des Weiteren sind entsprechende Vakuumsysteme störungsanfällig, da stets gewährleistet werden muss, dass die Auflagefläche eines flächenmäßigen Substrats dichtend und gleichzeitig ausreichend beweglich über der Vakuum-Ansaugvorrichtung angeordnet ist.

Weiterhin ist aus der DE 199 61 361 A1 eine Vorrichtung bekannt zum Konfektionieren, insbesondere Schweißen, Perforieren und/oder Schneiden, von bewegten Kunststofffolienbahnen mit einer Einrichtung zum Zuführen von Energie zur Erwärmung und zum Ausüben von mechanischem Druck in dem Bearbeitungsbereich.

Schließlich ist aus der US 2003/0000639 A1 ein Verfahren zur Herstellung wirkstoffbeladener Substrate bekannt.

Ausgehend vom vorliegenden Stand der Technik hat sich die Erfindung die Aufgabe gestellt, eine Vorrichtung zum Schneiden von flächenmäßigen Substraten dahingehend zu verbessern, dass sie einfacher und resistenter gegen Störungen ausgebildet sein kann.

Diese Aufgabe wird durch eine erfindungsgemäße Vorrichtung zum Schneiden von wirkstoffbeladenen flächenmäßigen Substraten nach dem Anspruch 1 und ein Verfahren nach dem Anspruch 8 gelöst. Vorteilhafte Weiterbildungen sowie zweckmäßige Ausgestaltungen sind in den abhängigen Ansprüchen angegeben.

Die Erfindung betrifft eine Vorrichtung zum Schneiden von wirkstoffbeladenen flächenmäßigen Substraten, insbesondere von transdermalen Systemen (TDS), wie beispielsweise Wirkstoffpflastern, oder aber auch oral verabreichbare Wirkstofffilme (oral dissolvable films - ODF).

Bei der erfindungsgemäßen Vorrichtung wird das Substrat als Endlos-Substrat vorgefertigt, welches durch in der Vorrichtung angeordnete Vorschubmittel zum Transport kontinuierlich transportiert wird. Die Vorschubmittel sind dabei durch ein erstes und ein zweites Walzenpaar gebildet, welche Vorschubmomente auf das Endlos-Substrat ausüben. Vorschubmomente können einerseits angetriebene Walzenpaare bewerkstelligen, andererseits aber auch durch Haltemomente gegeben sein.

Das Endlos-Substrat wird zwischen den Walzenpaaren frei schwebend eingespannt, wobei im Bereich zwischen den Walzenpaaren eine Vorrichtung mit einem Schneidlaser zum segmentartigen Schneiden des Substrats vorgesehen ist. Der Schneidlaser, welcher ein berührungsloses Schneiden mit einer einstellbaren Schnitttiefe entlang einer vorgegebenen Kontur ausführt, schneidet das frei schwebende Endlos-Substrat zwischen den walzenpaaren.

Durch die erfindungsgemäße vorrichtung wird erreicht, dass durch das Anordnen des Endlos-Substrats zwischen den Walzenpaaren dieses frei schwebend in einem Schneidbereich zwischen den Walzenpaaren gehalten wird, wodurch ein Bearbeiten mittels eines Schneidlasers möglich ist. Da der Schneidlaser ein berührungsloses schneidverfahren ausführt, ist es nicht erforderlich, erhebliche Gegenkräfte, wie beispielsweise beim Aufdrücken eines Schneidmessers, aufzunehmen, sodass ein Schneiden eines frei schwebenden Endlos-Substrats ausgeführt werden kann. Unter einem Schneiden eines Endlos-Substrats kann hierbei ein vollständig durchzuschneidender Film verstanden werden, es können aber auch Kombinationssysteme aus einem Trägerfilm, einem darauf angeordneten wirkstoffbeladenen Film und/oder einer darüber angeordneten Deckschicht vorgesehen sein.

In einer erfindungsgemäßen Weiterbildung der Vorrichtung nach Anspruch 1 ist vorgesehen, dass das in Transportrichtung erste angeordnete Walzenpaar vor dem Schneidbereich ein geringeres Vorschubmoment auf das Endlos-Substrat ausübt, als das in Transportrichtung zweite angeordnete Walzenpaar nach dem Schneidbereich.

Unter dem Voschubmoment ist die Zug- bzw. Haltekraft zu verstehen, welche von dem Walzenpaar auf das Endlos-Substrat ausgeübt wird.

Wird z. B. das zweite Walzenpaar, welches nach dem Schneidbereich angeordnet ist, angetrieben und das erste Walzenpaar, welches vor dem Schneidbereich angeordnet ist, leicht gebremst, so entsteht eine definierte Spannung des Endlos-Substrats zwischen den Walzenpaaren, welche eine vorteilhafte Eigenschaft für die Bearbeitung aufweist. Auf diese Weise ist es möglich, dass einerseits definierte scharfe Strukturen mit dem Schneidlaser ausgeschnitten werden, andererseits aber auch umfassende Strukturen, welche ein Herausfallen der ausgeschnittenen Struktur bedingen, ausgeschnitten werden können. Es ist auch möglich, an den Walzenpaaren Antriebe, beispielsweise durch Servomotoren anzuordnen, welche zur Erreichung der entsprechenden Vorschubmoment derart aufeinander abgestimmt werden, dass eine definierte Spannung im Schneidbereich erzielt wird.

In einer weiteren zweckmäßigen Ausgestaltung der erfindungsgemäßen Vorrichtung ist vorgesehen, dass das zweite Walzenpaar in Transportrichtung nach dem Schneidbereich Hilfsmittel umfasst, die eine nach dem Schneidvorgang überschüssige Deckschicht von einer Trägerschicht trennen. Durch eine entsprechende Abtrennklinge oder entsprechende Entnahmemittel einer Deckschicht kann erreicht werden, dass nach dem Schneidvorgang auf einer Trägerschicht verbleibende Segmente genutzt werden können und ein Verschnitt, welcher eine Deckschicht und/oder überschüssige Bestandteile des wirkstoffbeladenen Substrats darstellt, entfernt wird. Entsprechende Führungen sind aus dem Stand der Technik bekannt.

In einer zweckmäßigen Ausgestaltung der erfindungsgemäßen Vorrichtung ist das Endlos-Substrat im Schneidbereich in der Vorrichtung freilaufend aufgehängt.

Wenn auf eventuelle, insbesondere seitliche Führungsvorrichtungen des Endlos-Substrats im Schneidbereich verzichtet wird, kann ein maximal zur Verfügung stehender Bereich durch die Laserschneidvorrichtung angesteuert werden.

In einer weiteren zweckmäßigen Ausgestaltung ist vorgesehen, dass die Transportrichtung umkehrbar ist. Auf diese Weise wird die Flexibilität des Einsatzbereichs der erfindungsgemäßen Vorrichtung erhöht.

Durch erfindungsgemässige einstellbare Fokussiermittel und/oder über eine Leistungsregelung besteht die Möglichkeit, dass beispielsweise eine Trägerschicht, welche unter einer flächenmäßig angeordneten wirkstoffbeladenen Substratschicht angeordnet, nicht durchtrennt wird, wohingegen die Substratschicht einem Schneidvorgang ausgesetzt wird. Auf diese Weise können auf einem Träger unterschiedliche Portionierungen ausgeschnitten werden, welche später zum Gebrauch einzeln vom Träger ablösbar sind, ohne dass der Träger dabei in Mitleidenschaft gezogen wird. Auch das Schneiden durch eine für das Laserlicht transparente Deckschicht, ohne diese zu durchtrennen, ist denkbar.

In einer zweckmäßigen Weiterbildung der Erfindung ist über dies vorgesehen, dass der Schneidlaser dazu ausgelegt ist, eine Beschriftung oder Dekoration in Form einer Laserschrift bzw. Lasergravur in eine Deckschicht und/oder in ein wirkstoffbeladenes Substrat und/oder in eine Trägerschicht vorzunehmen.

Durch entsprechende Leistungsregulierung und/oder die Fokussierung kann der Laser derart eingestellt werden, dass die Energie nicht für einen vollständigen Schneidvorgang ausreicht, jedoch sichtbare Spuren auf der Oberfläche hinterlassen werden. Dies kann insbesondere vorteilhaft dafür sein, beispielsweise Marken oder Logos auf entsprechende Segmente aufzudrucken, oder Anweisungen bzw. Sicherheitshinweise auf einer Deckschicht anzubringen.

In einer über dies zweckmäßigen Ausgestaltung ist vorgesehen, dass der Schneidlaser mittels einer CNC-Steuerung dazu ausgelegt ist, eine einstellbare Schnittform und Schnitttiefe auszuführen.

Durch die Nutzung einer Computersteuerung, insbesondere einer CMC-Steuerung für den Schneidlaser sind nahezu beliebige Formen in erheblich erhöhter Prozessgeschwindigkeit schneidbar, sodass eine industrielle Fertigung entsprechender zugeschnittener wirkstoffbeladener Substrate während des bewegten Substrats eine wirtschaftliche hohe Taktzahl zulässt.

Des Weiteren betrifft die Erfindung ein Verfahren zur Herstellung wirkstoffbeladener Substrate, wobei ein als flächenmäßiges Endlos-Substrat gebildetes wirkstoffbeladenes System vorzugsweise mit einem darunter angeordneten Trägerfilm und insbesondere einer darüber angeordneten Deckschicht in einem Schneidbereich einer Laserschneidvorrichtung geführt wird. Dabei wird das Endlos-Substrat von zwei drehenden Walzenpaaren durch den Schneidbereich kontinuierlich transportiert und dort während des Transports in Bewegung von dem Laser geschnitten. Der Laser kann das Substrat sowohl durchtrennen, ist aber auch zur Beschriftung und/oder Dekoration geeignet. Die Walzenpaare sind dabei mit Vorschubmomenten auf das Endlos-Substrat einwirkend ausgebildet und das Endlos-Substrat wird im Schneidbereich freilaufend transportiert.

Das erfindungsgemäße Verfahren stellt eine erhebliche Vereinfachung bei der Herstellung entsprechender Systeme dar, da in kontinuierlicher Bewegung, sozusagen im Fluss geschnitten werden kann, wodurch hohe Taktzeiten bei der Herstellung realisierbar sind.

In einer zweckmäßigen Weiterbildung des erfindungsgemäßen Verfahrens ist vorgesehen, dass die Vorschubmomente der Walzenpaare derart voneinander abweichen, dass das Endlos-Substrat im Schneidbereich eine definierte Spannung erhält.

Die Erfindung ermöglicht somit ein berührungsloses Zuschneiden ohne mechanische Belastung. Des Weiteren sind in der Formgebung kaum Grenzen gesetzt. Auch einzelne Teilschichten, wie sie beispielsweise bei Multilayer-Systemen vorkommen, können mit dieser Technologie durchtrennt werden. Hierzu müssen meist nur Parameter an der Zuschnittanlage, vorzugsweise am Laser geändert werden, ohne dass mechanische Änderungen an der Verarbeitungsstation notwendig sind. Selbst sehr filigrane und beliebige Konturen können ohne großen Aufwand hergestellt werden. Durch die berührungslose Bearbeitung entsteht kein Verschleiß an der Maschine wie es bei den Stanzen oder ähnlichen Bearbeitungsverfahren der Fall ist. Die Beschriftung kann im gleichen Arbeitsgang mit der gleichen Maschine und der gleichen Aufspannung erfolgen.

TDS oder ähnliches werden bei der Herstellung meist auf Rollen gewickelt, welche dann in die Vorrichtung anhand einer Schnittstelle eingeführt werden. Durch das kontinuierlich oder taktweise kontinuierliche geführte Band kann nun das zu bearbeitende Material in dem Laserschneidbereich bearbeitet werden. Die Parameter für den Zuschnitt werden je nach Zusammensetzung und Materialstärke angepasst. Hier ist die Brennweite, Frequenz sowie die Schnittgeschwindigkeit zu nennen. Die entstandenen TDS-Formen werden aus der Bearbeitungszone entfernt und separiert. Bei mehrlagigen TDS, bei denen nicht alle Schichten durchtrennt werden, ist es notwendig nach dem Vorschneiden das entstandene Restmaterial zu entfernen, um dann die verbleibende Trägerfolie in Verpackungsgröße zu schneiden.

Erfindungsgemäß können auch Kleinstteile aus folienartigem Material auf Pulverbasis, insbesondere aus Stärkefolien ausgeschnitten werden.

Um Stärkefolien produzieren zu können wird die in Pulverform vorhandene Stärke in einer Flüssigkeit gelöst und zu einem homogenen Gemisch aufbereitet. Mit verschiedenen Zusätzen wie Weichmacher usw. wird die Lösung angereichert.

Die Lösung in flüssiger Form kann nun durch einen Kalander auf ein Trägermedium aufgetragen werden. Je nach Einstellung des Kalanders kann die Dicke der entstehenden Stärkefolie beeinflusst werden. Die entstandene Folie wird durch Zufügen von Wärme zu einer festen und bearbeitbaren Folie getrocknet. Auch ein Auswalzen auf eine entsprechende Dicke oder das Abziehen mit einer Abziehklinge ist denkbar.

Die Erfindung ermöglicht auch hier ein berührungsloses Zuschneiden von Stärkefolien ohne mechanische Belastung. Außerdem ist auch der Zuschnitt von verschiedenen Folienstärken ohne Umrüstung der Maschine, durch einfache Betriebsparametervariation möglich. Selbst sehr filigrane Teilchen können ohne großen Aufwand hergestellt werden, wobei auch die Kontur beliebig wählbar ist. Durch die berührungslose Bearbeitung entsteht auch kein Verschleiß an der Maschine wie es bei den Stanzen oder ähnlichen Bearbeitungsverfahren der Fall ist.

Erfindungsgemäße Produkte können somit auch Formpartikel auf Pulverbasis, insbesondere auf der Basis von Stärkepulver sein, wobei die Pulverbasis durch Vorbehandlung, beispielsweise durch Eintrocknung einer Lösung oder durch verpressen in eine flächenmäßige bzw. folienartige Ebene gebracht wird, und das Formpartikel mittels einer Trennvorrichtung aus der Ebene ausgeschnitten wird, **dadurch gekennzeichnet, dass** die Trennvorrichtung berührungslos arbeitet, vorzugsweise ein Schneidlaser ist.

Der Kern der Erfindung ist in nachfolgend beschriebenen Ausführungsbeispielen exemplarisch dargestellt. Die Erfindung ist jedoch nicht auf die Ausführungsbeispiele beschränkt, sie umfasst vielmehr all diejenigen Ausgestaltungen, welche vom erfindungsgemäßen Gedanken Gebrauch machen.

Es zeigen:
- Fig.1: Eine Vorrichtung mit einem einlagigen Endlos-Substrat
- Fig.2: Eine Vorrichtung mit einem mehrlagigen Endlos-Substrat
- Fig.3: Eine exemplarische Darstellung eines TDS
- Fig. 4: Ein mehrlagiges Endlos-Substrat
- Fig.5: Ein geschnittenes mehrlagiges Endlos-Substrat

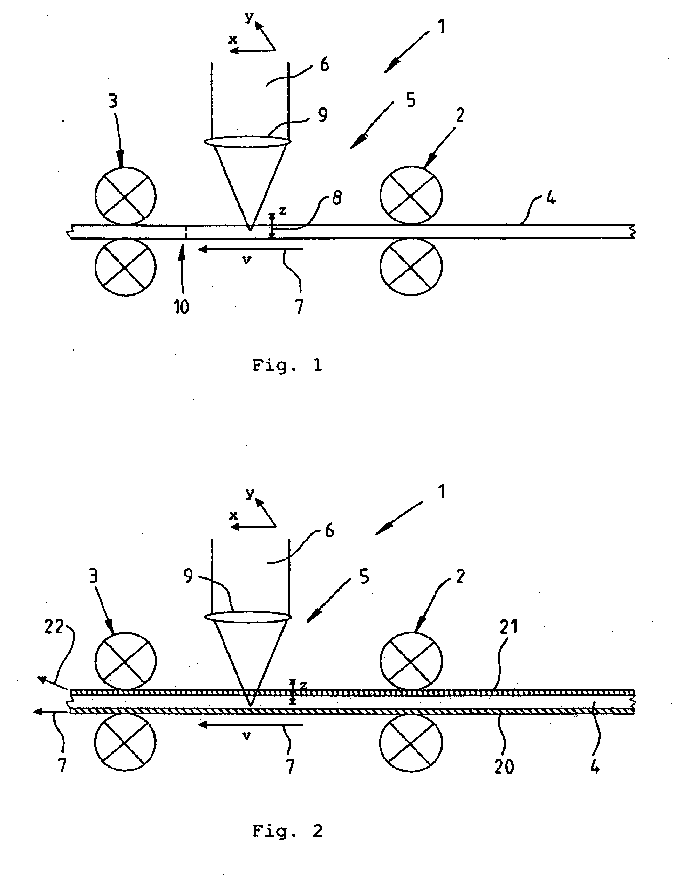

Das Ausführungsbeispiel zeigt in seiner Figur 1 eine erfindungsgemäße Vorrichtung 1 mit einem ersten Walzenpaar 2 sowie einem zweiten Walzenpaar 3 und ein zwischen den Walzenpaaren angeordnetes Endlos-Substrat 4, welches durch die Walzenpaare durch einen Schneidbereich 5 transportiert wird. Der Schneidbereich 5 zwischen den Walzenpaaren 2,3 ist derart ausgebildet, dass das Endlos-Substrat 4 dort als freihängender bzw. freilaufender Bereich gehalten wird, wodurch eine Laserschneidvorrichtung 6 Schnittvorgänge auf dem Substrat 4 ausführen kann.

Das zweite Walzenpaar 3 ist hierbei vorzugsweise durch einen Servomotor angetrieben, das erste Walzenpaar 2 ist mit einem Widerstandserzeuger bzw. einer Bremsvorrichtung ausgestattet, damit der Schneidbereich 5 und der darin angeordnete Bestandteil des Endlos-Substrats 4 eine definierte Spannung erhält. Durch die entsprechende Spannung des Endlos-Substrats 4 ist es möglich, dass der Schneidlaser 6 durch eine X-Y-Steuerung bewegt wird, und der Schnittvorgang während des kontinuierlichen Transports in Transportrichtung 7 des Endlos-Substrats erfolgt.

Die Schnitttiefe 8 des Schneidlasers 6 lässt sich durch entsprechende Einstellung der Fokussiermittel 9 und/oder durch Leistungsregulierung des Schneidlasers 6 einstellen. Der durch den Schneidlaser 6 erzeugte Schnitt 10 kann sowohl das Endlos-Substrat 4 vollständig durchtrennen als auch beispielsweise als Perforation vorgesehen werden.

Figur 2 zeigt eine erfindungsgemäße Vorrichtung, wobei in Figur 2 das Schneiden eines mehrlagigen Endlos-Substrats, bestehend aus dem wirkstoffbeladenen Endlos-Substrat 4, einer darunter angeordneten Trägerschicht 20 und einer darüber angeordneten Deckschicht 21, dargestellt ist. In Transportrichtung 7 wird das mehrlagige System durch die Walzenpaare 2;3 erfindungsgemäß durch den Schneidbereich 5 transportiert, wobei der Schneidlaser 6 durch entsprechende Wahl der Schnitttiefe 8 in der Lage ist, nur einzelne Schichtbestandteile des mehrlagigen Substrats zu durchschneiden. Insbesondere im Fall, dass die Deckschicht 21 für die Wellenlänge des Schneidlasers transparent ausgebildet ist, besteht die Möglichkeit, dass die Fokussiereinheit 9 den Schneidlaser 6 nur auf die wirkstoffbeladene Substratschicht 4 einwirken lässt, sodass ein Schneidvorgang zwischen zwei unbeschadeten Schichten, gebildet aus Trägerschicht 20 und Deckschicht 21, durchgeführt werden kann.

In Transportrichtung 7 an das zweite walzenpaar 3 anschließend können sodann Mittel zum Abheben der Deckschicht 21 vorgesehen sein, welche die Deckschicht entlang einer Abheberichtung 22 von der Transportrichtung 7 der Trägerschicht 20 mit der darauf angeordneten wirkstoffbeladenen Schicht 4 trennen.

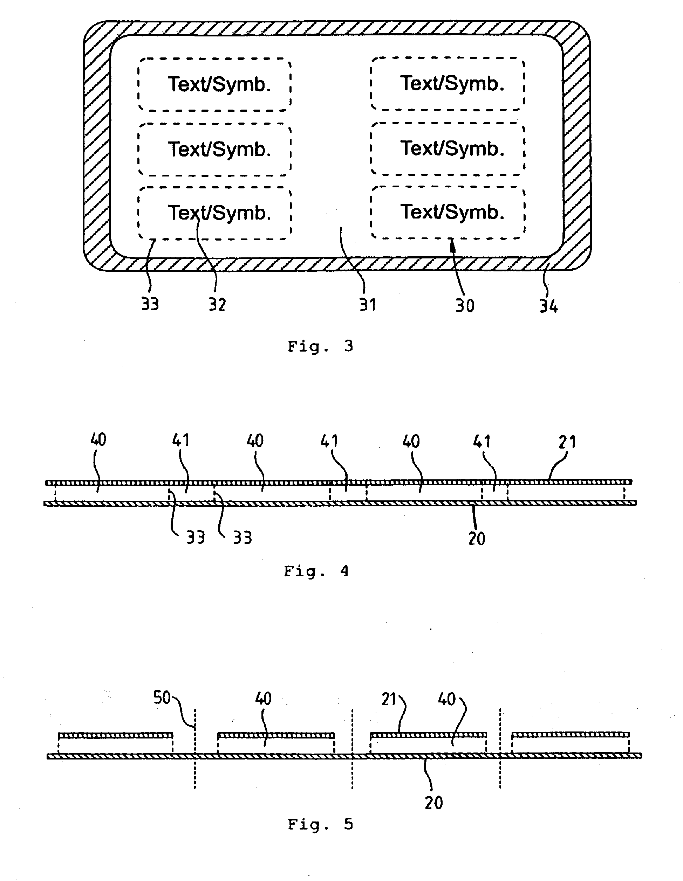

Figur 3 zeigt eine exemplarische Darstellung eines transdermalen Systems (Wirkstoffpflaster), bei welchem eine Kontur 30, vorliegend gestrichelt in Art einer Perforation dargestellt, in ein flächenmäßiges Substrat 31 geschnitten wurde. Im Innenbereich der Kontur 30 befindet sich eine Gravur 32, welche beispielsweise zur Anordnung eines Markennamens oder eines Logos vorgesehen sein kann. Die Schnittlinie 33, welche die Kontur 30 umgibt, trennt einen Innenbereich der Kontur, welcher später als wirkstoffbeladenes Substrat auf die Haut und/oder zur oralen Aufnahme vorgesehen ist, von einem Umgebunasbereich des flächenmäßigen Substrats 31, welcher als Verschnitt zu betrachten ist. Im Fall der Anordnung eines entsprechenden flächenmäßigen Substrats auf einem Träger 34, welcher vorliegend dargestellt ist, aber im Fall der Anwendung als ODF nicht zwingend erforderlich ist, kann das flächenmäßige Substrat 31 im Außenbereich der Kontur 30 auch entsprechend der in Figur 2 dargestellten Fassung entfernt werden, sodass keine zusätzlichen wirkstoffbeladenen Bestandteile des Verschnitts beim fertigen Produkt verbleiben.

Figur 4 zeigt eine ausschnittsweise Darstellung eines mehrlagigen Endlos-Substrats, gebildet aus einer Trägerschicht 20, einer darüber angeordneten wirkstoffbeladenen Substratschicht 4 sowie einer wiederum darauf angeordneten Deckschicht 21. Exemplarisch dargestellt ist vorliegend ein wirkstoffbeladenes Substratelement 40, welches später als zu verabreichendes TDS oder ODF vorgesehen ist. Zwischen den Elementen 40 befindet sich, jeweils begrenzt von einer Schnittlinie 33, ein Verschnittbereich 41, welcher zu einem späteren Zeitpunkt entfernt werden kann.

Figur 5 zeigt eine Darstellung der fertig bearbeiteten Ausführung eines TDS-Substrats nach Fig. 4, bei welchem auf der Trägerschicht 20 wirkstoffbeladene Substratelemente 40, abgedeckt von einer Deckschicht 21, vorliegen. Zwischen den wirkstoffbeladenen Substratelementen 40 sind die Verschnittbereiche 41 entfernt worder, und Schnittlinien 50 zur abschließenden Durchtrennung und Portionierung der einzelnen wirkstoffbeladenen Substratelemente sind angedeutet.

### Bezugszeichenliste:

- 1: Vorrichtung
- 2: Walzenpaar
- 3: Zweites Walzenpaar
- 4: Endlos-Substrat
- 4: Wirkstoffbeladenes Substrat
- 5: Schneidbereich
- 6: Schneidlaser
- 7: Transportrichtung
- 8: Schnitttiefe
- 9: Fokusiereinheit
- 10: Schnitt
- 20: Trägerschicht
- 21: Deckschicht
- 22: Abheberichtung
- 30: Kontur
- 31: Flächenmäßiges Substrat
- 32: Gravur
- 33: Schnittlinie
- 34: Träger
- 40: wirkstoffbeladenes Substratelement
- 41: Verschnittbereich
- 50: Schnittlinie

## Patentansprüche

1. Vorrichtung (1) zum Schneiden von wirkstoffbeladenen flächenmäßigen Substraten (4), insbesondere von Transdermalen Systemen (TDS) wie Wirkstoffpflastern oder oral verabreichbaren Wirkstofffilmen (ODF), wobei das Substrat (4) als Endlossubstrat ausgebildet ist, welches durch angeordnete Vorschubmittel (2, 3) zum Transport kontinuierlich transportiert wird, wobei die Vorschubmittel (2, 3) eine erstes (2) und ein zweites (3) Walzenpaar umfassen, welche Vorschubmomente auf das Endlossubstrat (4) ausüben, und das Endlossubstrat (4) zwischen den Walzenpaaren (2, 3) frei schwebend eingespannt ist, und wobei die Vorrichtung (1) einen Schneidbereich (5) zwischen den Walzenpaaren (2, 3) mit einem Schneidlaser (6) zum segmentartigen Schneiden des Substrats (4) umfasst, welcher ein berührungsloses Schneiden entlang einer vorgegebenen Kontur ausführt, **dadurch gekennzeichnet, dass** der Schneidlaser (6) das berührungslose Schneiden in einer einstellbaren Schnitttiefe (8) ausführt, wobei der Schneidlaser (6) mittels Fokussiermitteln (9) und/oder über eine Leistungsregelung im Endlossubstrat (4) unterschiedliche Schichten auf unterschiedlichen Schnitttiefen (8) durchtrennen kann.

2. Vorrichtung (1) nach Anspruch 1, **dadurch gekennzeichnet, dass** das in Transportrichtung (7) erste angeordnete Walzenpaar (2) vor dem Schneidbereich (5) ein geringeres Vorschubmoment auf das Endlossubstrat (4) ausübt, als das in Transportrichtung (7) zweite angeordnete Walzenpaar (3) nach dem Schneidbereich (5).

3. Vorrichtung (1) nach einem der vorhergehenden Ansprüche 1 bis 2, **dadurch gekennzeichnet, dass** das zweite Walzenpaar (3) in Transportrichtung (7) nach dem Schneidbereich (5) Hilfsmittel umfasst, die eine nach dem Schneidvorgang überschüssige Deckschicht (21) von einer Trägerschicht (20) trennen.

4. Vorrichtung (1) nach einem der vorhergehenden Ansprüche 1 bis 3, **dadurch gekennzeichnet, dass** das Endlossubstrat (4) im Schneidbereich (5) in der Vorrichtung (1) freilaufenden aufgehängt ist.

5. Vorrichtung (1) nach einem der vorhergehenden Ansprüche 1 bis 4, **dadurch gekennzeichnet, dass** die Transportrichtung (7) umkehrbar ist.

6. Vorrichtung (1) nach einem der vorhergehenden Ansprüche 1 bis 5, **dadurch gekennzeichnet, dass** der Schneidlaser (6) dazu ausgelegt ist eine Beschriftung oder Dekoration in Form einer Laserschrift bzw. Lasergravur in eine Deckschicht (20, 21) vorzunehmen.

7. Vorrichtung (1) nach einem der vorhergehenden Ansprüche 1 bis 6, **dadurch gekennzeichnet, dass** der Schneidlaser (6) mittels CNC Steuerung dazu ausgelegt ist, eine einstellbare Schnittform und Schnitttiefe (8) auszuführen.

8. Verfahren zur Herstellung wirkstoffbeladener Substrate (4), wobei ein als flächenmäßiges Endlossubstrat (4) gebildetes wirkstoffbeladenes System, vorzugsweise mit einem darunter angeordneten Trägerfilm (4) und insbesondere einer darüber angeordneten Deckschicht (21) in einem Schneidbereich (5) einer Laserschneidvorrichtung (1) geführt wird,
**dadurch gekennzeichnet, dass** das Endlossubstrat (4) von zwei drehenden Walzenpaaren (2, 3) durch den Schneidbereich (5) kontinuierlich transportiert und dort während des Transports von dem Laser (6) derart geschnitten wird, dass durch entsprechende einstellbare Fokussiermittel (9) und/oder über eine Leistungsregelung eine Trägerschicht (20), welche unter einer flächenmäßig angeordneten wirkstoffbeladenen substratschicht angeordnet ist, nicht durchtrennt wird, wohingegen die Substratschicht einem Schneidvorgang ausgesetzt wird,
wobei die Walzenpaare (2, 3) mit Vorschubmomenten auf das Endlossubstrat (4) einwirken und
wobei das Endlossubstrat (4) im Schneidbereich (5) freilaufend transportiert wird.

9. Verfahren nach Anspruch 8, **dadurch gekennzeichnet, dass** die Vorschubmomente der Walzenpaare (2, 3) derart voneinander abweichen, dass das Endlossubstrat (4) im Schneidbereich (5) eine definierte Spannung erhält.

## Claims

1. A device (1) for cutting area substrates (4) loaded with active agents , in particular transdermal systems (TDS), such as plasters containing active agents, or orally administered active agent films (ODF), wherein the substrate (4) is embodied as a continuous substrate, which is continuously transported for transport by means of feeding means (2, 3), wherein the feeding means (2, 3) comprise a first (2) and a second (3) roller pair exerting feeding torques upon the continuous substrate (4), and the continuous substrate (4) is tensioned between the roller pairs (2, 3) in a suspended manner, and wherein the device (1) comprises a cutting region (5) between the roller pairs (2, 3), having a cutting laser (6) for the segment-type cutting of the substrate (4), which executes a contact-free cutting along a predetermined contour, **characterized in that** the cutting laser (6) executes the contact-free cutting at an adjustable cutting depth (8), wherein the cutting laser (6) may separate variable layers of various cutting depths (8) in the continuous substrate (4) by means of focusing means (9), and/or via a power regulation.

2. The device according to claim 1, **characterized in that** the first roller pair (2) disposed in the transport direction (7) exerts a lower feeding torque upon the continuous substrate (4) in front of the cutting region (5) than the second roller pair (3) disposed in the transport direction (7) behind the cutting region (5).

3. The device (1) according to one of the preceding claims 1 to 2, **characterized in that** the second roller pair (3) comprises in the transport direction (7) auxiliary means behind the cutting region (5), which separate any excess of the cover layer (21) from a carrier layer (20) after the cutting process.

4. The device (1) according to one of the preceding claims 1 to 3, **characterized in that** the continuous substrate (4) is freely suspended in the device (1) in the cutting region (5).

5. The device (1) according to one of the preceding claims 1 to 4, **characterized in that** the transport direction (7) is reversible.

6. The device (1) according to one of the preceding claims 1 to 5, **characterized in that** the cutting laser (6) is designed such that text or decoration in the form of laser writing or laser engraving may be carried out onto a cover layer (20, 21).

7. The device (1) according to one of the preceding claims 1 to 6, **characterized in that** the cutting laser (6) is designed to carry out an adjustable cutting form and cutting depth (8) by means of CNC control.

8. A method for the production of substrates (4) loaded with active agents, wherein a system loaded with active agents, embodied as a continuous area substrate (4), preferably having a carrier film (4) disposed beneath the same, and in particular having a cover layer (21) disposed above the same, is guided in a cutting region (5) of a laser cutting device (1),
**characterized in that** the continuous substrate (4) is continuously transported through the cutting region (5) by two rotating roller pairs (2, 3), and is cut there during the transport of the laser (6) such that a carrier layer (20), being disposed beneath a substrate layer loaded with active agents, which is disposed on an area, is not separated by means of a respective, variable focusing means, and/or via a power regulation, whereas the substrate layer is subjected to a cutting process,
wherein the roller pairs (2, 3) act upon the continuous substrate (4) with feeding torques, and wherein the continuous substrate (4) is freely transported within the cutting region (5).

9. The method according to claim 8, **characterized in that** the feeding torques of the roller pairs (2, 3) differ from each other such that the continuous substrate (4) is provided with a defined tension in the cutting region (5).

## Revendications

1. Dispositif (1) pour couper des substrats bidimensionnels (4), chargés en principes actifs, en particulier des systèmes transdermiques (TDS) tels que des timbres à principe actif ou des films à principe actif pouvant être administrés par voie orale (ODF), le substrat (4) étant configuré comme un substrat continu, qui est transporté en continu grâce à des moyens d'avancement (2, 3) destinés au transport, les moyens d'avancement (2, 3) comprenant une première (2) et une deuxième (3) paires de cylindres, qui exercent des moments d'avancement sur le substrat continu (4), et le substrat continu (4) étant serré en suspension libre entre les paires de cylindres, et le dispositif (1) comprenant une zone de coupe (5) entre les paires de cylindres (2, 3), comportant un laser de coupe (6) pour assurer la coupe par segments du substrat (4), qui exerce une coupe sans contact le long d'un contour prédéfini, **caractérisé en ce que** le laser de coupe (6) exécute la coupe sans contact sur une profondeur de coupe (8) pouvant être réglée, le laser de coupe (6) pouvant, à l'aide de moyens de focalisation (9) et/ou par l'intermédiaire d'une régulation de puissance, sectionner dans le substrat continu (4) différentes couches sur différentes profondeurs de coupe (8).

2. Dispositif (1) selon la revendication 1, **caractérisé en ce que** la première paire de cylindres (2) disposée dans la direction du transport (7) exerce, avant la zone de coupe (5), un moment d'avancement sur le substrat continu (4) qui est plus faible que celui exercé par la deuxième paire de cylindre (3), disposée dans la direction de transport (7), après la zone de coupe (5).

3. Dispositif (1) selon l'une des revendications précédentes 1 à 2, **caractérisé en ce que** la deuxième paire de cylindres (3) comprend dans la direction du transport (7), après la zone de coupe (5), des moyens auxiliaires qui séparent d'une couche support (20) une couche de couverture (21) qui est excédentaire après l'opération de coupe.

4. Dispositif (1) selon l'une des revendications précédentes 1 à 3, **caractérisé en ce que** le substrat continu (4) est, dans la zone de coupe (5), suspendu librement dans le dispositif (1).

5. Dispositif (1) selon l'une des revendications précédentes 1 à 4, **caractérisé en ce que** la direction de transport (7) est réversible.

6. Dispositif (1) selon l'une des revendications précédentes 1 à 5, **caractérisé en ce que** le laser de coupe (6) est configuré pour réaliser une inscription ou une décoration, sous forme d'une inscription laser ou d'une gravure laser, dans une couche de couverture (20, 21).

7. Dispositif (1) selon l'une des revendications précédentes 1 à 6, **caractérisé en ce que** le laser de coupe (6) est, à l'aide d'une commande CNC, configuré de façon à réaliser une forme de coupe et une épaisseur de coupe (8) réglables.

8. Procédé de fabrication de substrats (4) chargé en principes actifs, dans lequel un système chargé en principes actifs, formé comme un substrat continu bidimensionnel (4), comportant de préférence un film support (4) disposé en-dessous et en particulier une couche de couverture (21) disposée par-dessus, est guidé dans une zone de coupe (5) d'un dispositif de coupe laser (1), **caractérisé en ce que** le substrat continu (4) est, par deux paires de cylindres (2, 3) en rotation, transporté en continu à travers la zone de coupe (5) et y est découpé par le laser (6) pendant le transport de telle sorte que, grâce à des moyens de focalisation correspondants réglables (9) et/ou par l'intermédiaire d'une régulation de puissance, une couche support (20), qui est disposée en-dessous d'une couche substrat chargée en principe actif et disposée d'une manière bidimensionnelle, ne soit pas sectionnée, tandis que la couche substrat est exposée à une opération de coupe, les paires de cylindres (2, 3) agissant avec des moments d'avancement sur le substrat continu (4), et le substrat continu (4) étant transporté librement dans la zone de coupe (5).

9. Procédé selon la revendication 8, **caractérisé en ce que** les moments d'avancement des paires de cylindres (2, 3) sont différents l'un de l'autre de telle sorte que le substrat continu (4) reçoive dans la zone de coupe (5) une tension définie.
